# EUROPEAN PATENT APPLICATION

(11) **EP 0 981 088 A1**
(43) Date of publication of application: **23.02.2000**
(21) Application number: 99115164.8
(22) Date of filing: 13.08.1999
(51) Int. Cl.: G06F 11/00

(54) **System, method and apparatus for software testing**

(30) Priority: 17.08.1998 US 135539
(71) Applicant: ERICSSON INC., Research Triangle Park, NC 27709 (US)
(72) Inventor: Tidwell, Paul Damian, Rowlett, Texas 75088 (US)
(74) Representative: HOFFMANN - EITLE

(57) **Abstract**

A system, method, and apparatus for testing an application stack by receiving an Abstract Syntax Notation One (ASN.1) specification and either an ASN.1 message or a data structure in a human-readable format is discussed. Where an ASN.1 message is received, the ASN.1 message is translated into the represented data structure in a human-readable format. Where the data structure in human-readable format is received, the data structure is translated into an ASN.1 message.

## Description

### BACKGROUND OF THE PRESENT INVENTION

### Field of the Invention

The present invention relates to the implementation of telecommunications services in accordance with industry standards and, more particularly to a system, method and apparatus for testing a software system using a known communication standard.

### Background and Objects of the Present Invention

International standardization organizations, such as the International Telephone and Telegraph Consultative Committee (CCITT), are made up of telecommunications system operators (largely governmental agencies) which jointly agree how various communications services are to be provided so that communications are seamless across international borders regardless of which equipment vendor supplies the interconnected systems. One element of communications standards defined and specified by CCITT, are data transmission protocols,i.e.,the format of both traffic in signaling messages to be used for particular services. For example, the form of signaling messages is often described using a tabular notation with their format and binary representation being specified by a table wherein the entries are the information elements from which they are built. This technique is rather convenient when the signaling message structure of a protocol is simple and when there is no need to consider different encoding schemes to represent the same information. CCITT Recommendations covering Signaling System No. 7 and Digital Signaling System No. One (DSS1) describe most of the application protocol data units in this manner.

However, as the signaling information to be exchanged between telecommunications systems becomes more complex, the limitations of tabular notation become exceedingly clear e.g., difficulties in representing structured elements and duplication of definitions due to the mixture between the syntax of an information element and the way in which it is encoded. In order to avoid some of these problems associated with complex signaling messages, CCITT began using a different technique of describing standardized signaling messages referred to as Abstract Syntax Notation One (ASN.1). ASN.1 provides a means to describe data types as well as the value of type in an abstract manner without determining the way instances of such data types are to be represented during transmission.

The purpose of using ASN.1 to specify CCITT protocols is to have a standardized language to express types with and to provide a standardized set of rules to transform an instance of one type into a stream of bytes. A system designer can use ASN.1 to specify and design a specific data structure. An instance of the data structure can then be transformed or encoded into a stream of bytes according to a predefined set of encoding rules, such as what are known in the art as "Basic Encoding Rules" (BER). Such a stream of bytes, referred to as an ASN.1 message, is then sent on a communications channel to another application program which decodes the stream of bytes according to details specific to the application and the platform on which the application resides. Thus, two different applications written in two different programming languages and running on two different types of computers using different internal representations of data can exchange instances of structured data types instead of exchanging bytes. This system of abstract representation of types eliminates a great deal of effort since no code need be written to process the transfer format of the data.

While ASN.1 specifications for a data type are relatively simple to use, developing the programs which use the data types represented by ASN.1 specifications is a complex process. Routines must be written for encoding and decoding ASN.1 messages according to the ASN.1 specifications. The routines can be written by a compiler program which writes source code that is implanted into and becomes a part of the application program. Such compilers, however, tend to be very costly, and, consequently, the routines are often manually written. It should also be understood that because of their sheer complexity,manually written routines tend to be error-prone. Furthermore, even routines written produced by compilers have been known to include errors. Accordingly,testing a system utilizing ASN.1 specifications is extremely important to work out the various bugs.

One of the difficulties involved in testing a system utilizing ASN.1 specifications, however, is the generation of useful test data. Proper testing of an application program requires observing the input and output behavior of the application program. Because the application program will receive ASN.1 messages from another application program in the completed system, the received test data must correspond to the ASN.1 messages produced by that another application program. Furthermore,the output of the application program will also communicate with other application programs in the form of ASN.1 messages. While the other application program could be used to generate outputs for testing purposes, a benefit to using ASN.1 is that communicating application programs in a system can be individually developed. Therefore, the other application program might be unavailable or even non-existent at the time of testing the first application program. Accordingly, the test data must frequently be generated by the programmer. Furthermore, the output behavior of the application program may include sending ASN.1 messages which are not in a human readable form. It should, of course, be understood that manually translating information into an ASN.1 message as well as deciphering ASN.1 messages into a human readable form is complicated and extremely error-prone. Errors occurring during the testing process often originate from improperly translated test data or improperly translated ASN.1 messages as opposed to errors in the application program.

Accordingly, it is an object of the present invention to provide a tool which can take an instance of a data type in a human readable format, as well as pursuant to an ASN.1 specification, and output an ASN.1 message.

It is also an object of the present invention to provide a tool which can take an ASN.1 message, also pursuant to the corresponding ASN.1 specification, and translate the ASN.1 message into a human-readable data structure.

### SUMMARY OF THE INVENTION

The present invention is directed to a system, method, and apparatus for testing an application stack in a software system by taking an Abstract Syntax Notation One (ASN.1) specification and test data, translating the test data into an ASN.1 message, and inputting the ASN.1 message into the application stack. The present invention is also directed to a system, method, and apparatus for testing an application stack in a software system by taking an ASN.1 specification and an ASN.1 message generated by the application stack, and translating the ASN.1 message into a human readable format.

### BRIEF DESCRIPTION OF THE DRAWINGS

A more complete understanding of the system, method, and apparatus of the present invention may be obtained by reference to the detailed description of the preferred embodiment(s) that follows, taken in conjunction with the accompanying drawings, wherein:
FIGURE 1 is a block diagram of a traditional telecommunications network;
FIGURE 2 is a block diagram illustrating an ISDN telecommunications network including an ISDN node that provides enhanced services over public and private lines;
FIGURE 3 is a block diagram of a software system using Abstract Syntax Notation One;
FIGURE 4 is a block diagram of an exemplary testing tool in accordance with the present invention;
FIGURE 5 is an information flow diagram of a testing method in accordance with the present invention; and
FIGURE 6 is a diagram illustrating a platform configurable for embodying the principles of the present invention.

### DESCRIPTION OF PREFERRED EMBODIMENTS

The present invention is particularly directed to the communication signaling message standards promulgated by the CCITT in Abstract Syntax Notation One (ASN.1) for the implementation of ISDN features and services. It should be understood, however, that the present invention is not limited to the standards set by CCITT for the interchange of data between telecommunications computing systems. Moreover, it is generally applicable to telecommunications computing environments which use deviations, modifications and extensions of the CCITT standards for the ASN.1 notation. The scope of the present invention with respect to the CCITT standards is more fully described in the following text.

The growth in information and communications technologies in recent years has created a wealth of economic opportunities. Vendors providing telecommunications services to the public are continually faced with new customer demands. Providing traditional telephone services is no longer enough. Today's users want the ability to transmit not only voice signals but also data, audio, video and multimedia signals in both real time as well as through asynchronous channels. To facilitate and to standardize the provision of enhanced telecommunications services, standard setting organizations such as the CCITT continue to publish a number of standards.

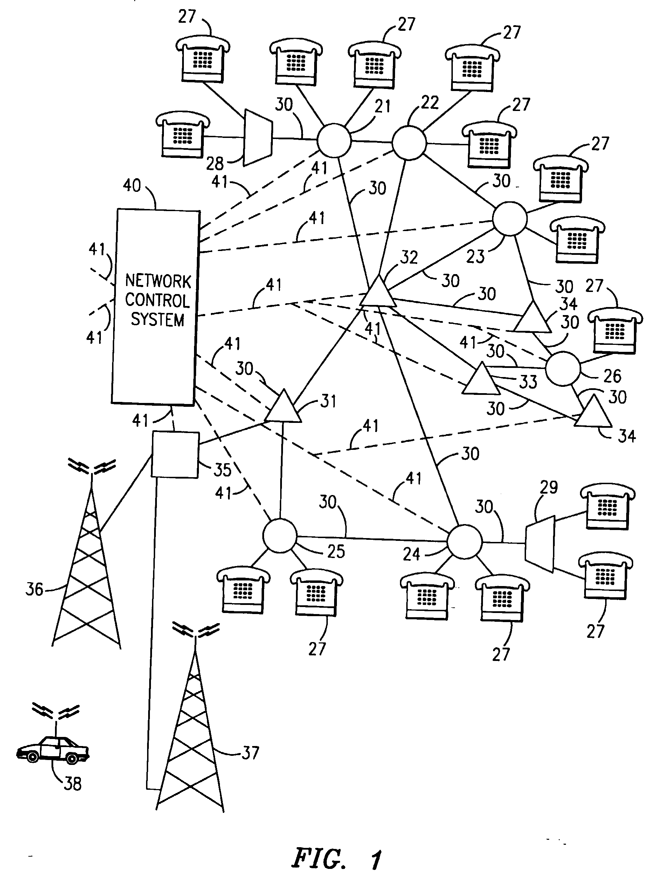

A traditional telecommunications network providing several types of conventional services, including that which is known as the Plain Old Telephone Service (POTS), is shown in FIGURE 1. In FIGURE 1, there is shown an illustrative schematic diagram of a telecommunications network including a plurality of local exchanges 21 to 26, each of which have a plurality of local subscribers connected thereto and represented by telephones 27. Two of the local exchanges 21 and 24 are represented as having remote subscriber multiplex stages 28 and 29 associated therewith which, in turn, have local customers 27 connected thereto. The network of FIGURE 1 also includes a plurality of trunk exchanges 31 to 34 which serve primarily to interconnect various local exchanges with one another and to provide routes between various parts of the network. Trunk exchange 31 is shown connected to a mobile exchange 35 which includes a pair of illustrative base stations 36 and 37 serving a plurality of mobile radio telephone subscribers represented at 38. In addition, other telecommunications services such as data bases, intelligent network Integrated Service Digital Network (ISDN) nodes, and private nodes such as PBXs may also be connected to various ones of the exchanges shown. Between each of the exchanges 21 to 35 in the network, there are shown a plurality of communication paths 30,each of which may comprise a plurality of communication circuits, including cables, optical links or radio links for carrying voice and/or data communication between the various exchanges within the network.

The network of FIGURE 1 also includes a network control system 40 which is connected to each of the exchanges 21 to 35 within the network by means of communication links 41 (represented by dotted lines). Signaling messages are exchanged over each of the paths 30 and links 41 in accordance with a defined protocol specified for the communications.

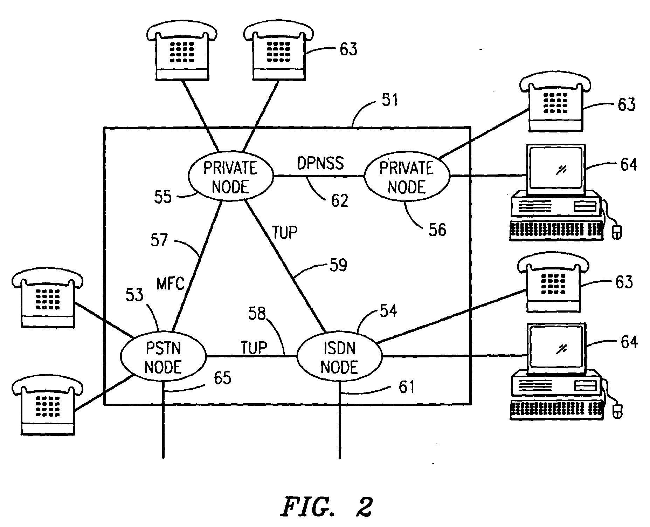

A portion of an advanced telecommunications network that provides additional enhanced services over and above user-dialable voice services, is illustratively shown in FIGURE 2. In FIGURE 2, a portion of a network 51 incorporates a plurality of separate nodes. For example, a local PSTN node 53 may be connected to an ISDN node 54, both of which are coupled to a first private business group node 55 which is in turn coupled to a second private business group node 56. The local PSTN node 53 communicates with the business group node 55 through a first protocol 57, while the ISDN node 54 communicates with both the local PSTN node 53 and the private business group node 55 through second protocols 58 and 59, respectively. The ISDN node 54 may communicate with other ISDN nodes via a third protocol 61 and the private node 56 communicates with the private node 55 via a fourth protocol 62. The PSTN node 53 may communicate with other PSTN nodes via a fifth protocol 65. Each of the separate nodes 53 to 56 include telephone subscribers 63 while the private business group node 56 and the ISDN node 54 may also include data communications subscribers 64. The way in which each of these nodes communicate with other disparate nodes via certain defined protocols is reflective of the need for a flexible means to define communication signaling message standards, such as by ASN.1 notation. The implementation of such uniform signaling standards enables computers on the PSTN, as well as private networks, to exchange information in a clear and reliable fashion. The telecommunications network of FIGURE 2 incorporates a variety of advanced functions and features such as ISDN services, for example through ISDN node 54.

In order to provide these additional services, telecommunications systems designers and service providers have long sought additional capabilities from their telecommunication equipment. In addition, telecommunications operating companies have also sought to automate the process of gathering and transmitting call charging information. The automation of call charging information reduces costs and increases operating efficiencies. Additional user-demanded services include the transmission of the name and number of the calling party along with or preceding a call and the ability to charge the cost of a call to third parties other than those initiating or terminating a call, etc.

One of the most significant barriers to the provision of these additional services has been the lack of uniformity in the design and operation of central office switching systems (CSSs) and of private branch exchanges (PABXs or PBXs). It should be noted that the problems of interoperability are more acute within the public switched telecommunications network (PSTN) applications than for private applications. This is because in a private application, such as a PBX, a user can avoid interoperability problems by simply using a single vendor for all of its equipment needs within its network and then depend on the equipment vendor to solve any such problems as and when they arise. However, the single vendor solution to interoperability problems is neither feasible nor desirable for PSTN applications.

Since there has been no market-driven solution to the quest for uniformity in the provision of supplementary services while avoiding the interoperability problem, numerous attempts have been made by the various national entities which operate telecommunication systems to set harmonious standards for the provision of supplementary services.

As discussed briefly above, the CCITT has developed standards for the notation and representation of protocols for the interchange of data between disparate telecommunications computers. The format of much of the data that is to be exchanged between various telecommunications applications on different vendor platforms is currently specified using the aforementioned Abstract Syntax Notation One (ASN.1) language, more fully described below. The actual encoding and decoding of data to be transmitted according to an ASN.1 data format specification is commonly done using the Basic Encoding Rules (BER), also explained at greater length below.

In designing new versions of Private Branch Exchanges (PBX), manufacturers of telecommunications systems and devices commonly use a standardized functional protocol to support supplementary services. One such functional protocol is the Generic Functional Protocol For The Support Of Supplementary Services (GFP), the details of which are also set forth below. The GFP offers a standard format for transferring information, such as the name of the calling or connected party, charging information, etc., across an ISDN line. The use of a standardized protocol such as GFP, permits PBXs manufactured by different vendors to be interconnected into an ISDN network. The GFP standard was set by the European Telecommunications Standards Institute (ETSI) and the European Computer Manufacturers Association (ECMA) and is described in the ASN.1 specification. The GFP data is sent across an ISDN line according to the BER.

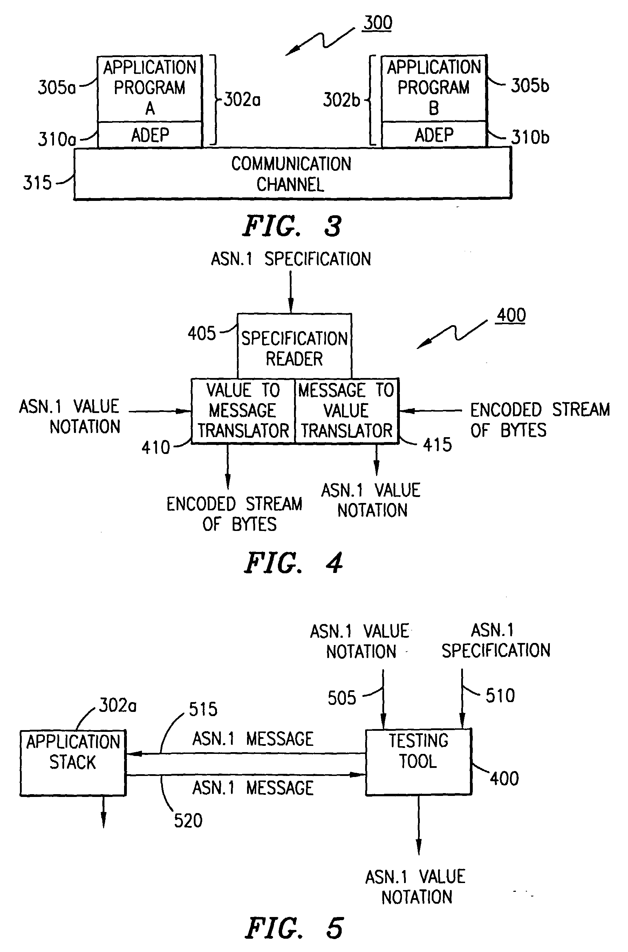

Referring now to FIGURE 3, a block diagram of a software system 300 using ASN.1 specifications is described. The software system 300 includes application programs 305a, 305b which are capable of performing a variety of functions such as providing supplementary services in a telecommunications system. Application program 305a and application program 305b require the communication of data to each other during normal operation of the software system 300.

In general, application program 305a and application program 305b reside on different platforms, as represented in FIGURE 3. The platform where the application programs reside and are executed can be a computer system integrated into a local exchange, such as the local exchange 21 of FIGURE 1. Because the application programs 305a, 305b reside on different platforms, a communications channel 315 is needed to transmit data between the application programs 305a, 305b. The communications channel 315 can be implemented using, for example, an ISDN line, a carrier, or an Ethernet link.

Although the platforms running the application programs 305a, 305b are so connected that a sequence of bytes can be sent from one platform to another platform, the system designer must still decide on the format for the data to be exchanged between the platforms. A common solution has been to write a customized implementation for the data exchange format between the platform. However, in many cases, the platforms exchanging data are not made by the same manufacturers. This is especially likely in a telecommunications system where two communicating platforms can be located in different cities, countries, or even different continents. If the platforms are not made by the same manufacturer the platforms are likely to use different internal representations of data structures, such as integers, characters, etc. Thus, for example, the platform on which application program 305a resides might store integers in byte order from left to right (known as "big endian" integers) while the platform on which application program 305b resides may store integer in byte order from right to left. Similarly, numeric data may be internally stored in either American Standard Code Information Interchange (ASCII) or Extended Binary-Coded Decimal Interchange Code (EBCDIC) representational formats.

In order for platforms using different internal representations of data structures to communicate with each other, ASN.1 is used to form at the data transmitted across the communication channel 315. As discussed, ASN.1 provides a standardized set of rules for representing instances of data structures which can then be encoded into a stream of bytes according to a predefined set of encoding rules. Although the most widely used encoding rules are the "Basic Encoding Rules" or BER, it should be understood that other encoding rules, e.g., Packed Encoding Rules (PER), may also be used. In any event, an encoded stream of bytes representing an instance of a data structure is referred to in the art as an ASN.1 message.

With reference again to FIGURE 3, an ASN.1 Decoder/Encoder Program module (ADEP) 310a, 310b is inserted between the respective application programs 305a, 305b and the communications channel 315. The ADEPs 310a, 310b encode data structures from the respective application programs 305a, 305b according to the ASN.1 specification into an ASN.1 message for transmission across the communication channel 315. The ADEPs 310a, 310b also decode an ASN.1 message received on the communications channel 315 into a format understood by the respective application programs 305a, 305b and the platform on which the application program resides.

Although in a preferred embodiment of the application programs 305a, 305b and the ADEPs 310a, 310b are implemented as separate and distinct layers, it should be understood that in an alternative embodiment the application programs 305a, 305b and the respective ADEPs 310a, 310b, can be integrated into a singe module. The application programs 305a, 305b and the ADEPs 310a, 310b in the presently preferred embodiment of the present invention are separated because the application program and the ADEP can then be written concurrently. Additionally, changes in the ASN.1 specification can be made requiring modifications to only the ADEPs 310a, 310b. With reference again to FIGURE 3, the combination of the application program 305 and the ADEP 310 together form what is known as an application stack 302.

In the context of describing the present invention, it is important to briefly explain the underlying and associated technology involved.

### Abstract Syntax Notation One

ASN.1 provides a means of describing data type as well as the values of these types in an abstract manner. ASN.1 includes a number of simple and structured built-in types which allows a user to define more complex types and associated data values by combining one or more of the built-in types. In addition, ASN.1 also provides a set of subtype constructors (e.g. value range and size constraints) to define types whose values are only a subset of the values of a parent type. Illustrative examples of simple built-in types in ASN.1 include the BOOLEAN type, the INTEGER type, the ENUMERATED type and the OCTET STRING type, while illustrative examples of built-in structured types include the SEQUENCE type, the SET type and the CHOICE type.

ASN.1 provides for two different syntax - the ASN.1 type notation and the ASN.1 value notation. The ASN.1 type notation is directed to the structure of the data type while ASN.1 value notation is directed to the value of an instance of the data type. The ASN.1 type notation and the ASN.1 value notation are best understood by considering a hypothetical personnel record as an illustrative example.

### Personnel Record Example

The structure of an exemplary personnel record and its value for a particular individual is informally detailed in TABLE 1 below.

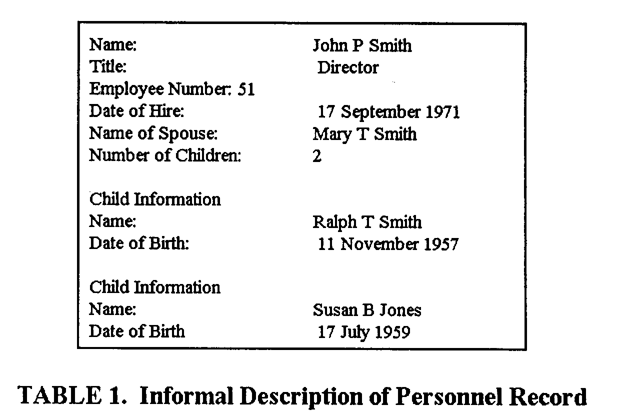

The structure of each such personnel record can be formally described as shown in TABLE 2 below using standard ASN.1 *type* notation for data types:

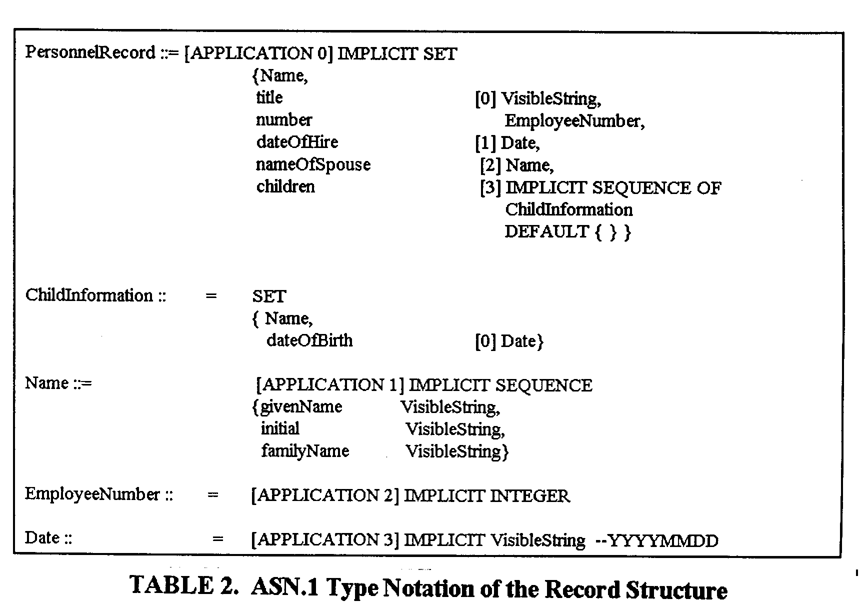

This example illustrates an aspect of parsing ASN.1 syntax. The syntactic construct "DEFAULT" can only be applied to an element of a "SEQUENCE" or a "SET"; it cannot be applied to an element of a "SEQUENCE OF". Thus the null default,"DEFAULT { }" in "PersonnelRecord" applies only to the variable "children" and not to the variable "ChildInformation". A collection of data structure described using ASN.1 type notation form what is known in the art as an ASN.1 specification.

The value of John Smith's personnel record can be formally described as shown in TABLE 3 below using the standard ASN.1 *value* notation for data values.

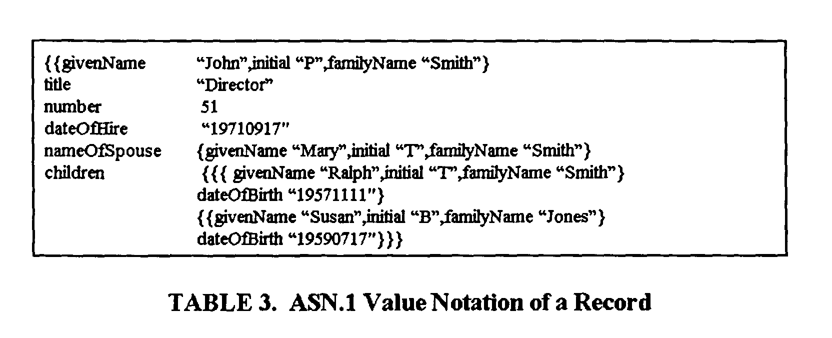

The ADEP 310 translates a data structure within the application program 305 into a stream of bytes in accordance with an ASN.1 specification and a set of encoding rules. The encoding rules can include, but are not limited to, BER and PER. The BER are defined in CCITT Recommendation X.209, "Specification of Basic Encoding Rules (BER)for Abstract Syntax Notation One(ASN.1)"(Geneva,Switzerland, 1987), which is hereby incorporated by reference herein. The PER are described in ISO/IEC CD ATA 25-2, "Packed Encoding Rules" (June 1991) which is hereby incorporated by reference herein.
An ASN.1 message representing the data structure described in Table 3 encoded using the BER and the ASN.1 specification in Table 2 is shown in Table 4. In order to perform this function, the ADEP 310 includes routines written in the same programming language as the application program 305 for encoding a data structure produced by the application program 305 into an ASN.1 message and decoding an ASN.1 message into a data structure understandable by the application program.

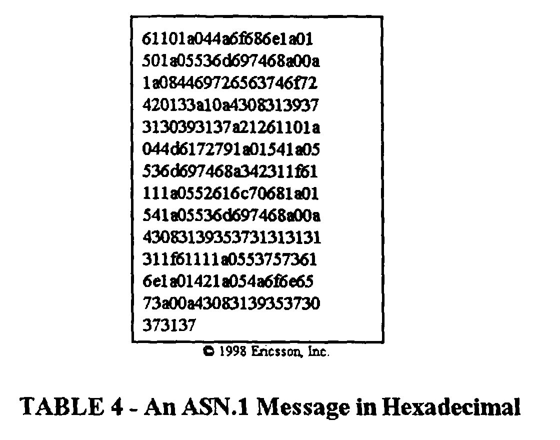

The ADEP 310 can be produced by an ASN.1 compiler which converts an ASN.1 specification, such as that in Table 2, into encoding and decoding routines in the programming language of the application program 305. Where a high-level programming language (for example, C, C++, FORTRAN) is used to write the application program, the output of the compiler is source code which is again compiled with the application program 305. As discussed, the ADEP 310 can also be written by a programmer without the use of a compiler.

Proper testing of the application stack 302a requires observing the input and output behavior of the application stack. Because the application stack 302a will receive ASN.1 messages from application stack 302b, the test data must correspond to the ASN.1 messages that are sent by application stack 302b. Furthermore, the output behavior of application stack 302a may include sending ASN.1 messages to application stack 302b.

Referring now to FIGURE 4, a block diagram of an exemplary testing tool 400 for testing an application stack, such as application stack 302a of FIGURE 3, is described. The testing tool 400 includes a specification reader 405, a value-to-message translator 410,and a message-to-value translator 415. The reader 405 inputs and reads an ASN.1 specification, such as that shown in Table 2, and creates an informal data structure. The function of the value-to-message translator 410 is to take an ASN.1 value notation of a data structure described using the ASN.1 specification, such as that shown in Table 2, inputted to the reader 405 and translate it into an ASN.1 message using an encoding standard, such as, but not limited to, BER or PER. The function of the message-to-value translator 415 is to take an ASN.1 message representing a data structure and translate it into the ASN.1 value notation of the data structure. The informal data structure created by the reader 405 is used by the message-to-value translator 415 to generate the ASN.1 value notation. Although in the present embodiment, the ASN.1 value notation is used by the value-to-message translator 410 and the message-to-value translator 415, it should be understood that any other human readable format can be used, and therefore, other embodiments may use another format.

The testing tool 400 inputs an ASN.1 specification and either an ASN.1 message or an ASN.1 value notation of a data structure. The reader 405 reads the ASN.1 specification and creates an informal data structure. Where an ASN.1 value notation is input to the testing tool 400, the value-to-message translator 410 translates the ASN.1 value notation into an ASN.1 message, and the testing tool 400 outputs the ASN.1 message as an encoded stream of bytes. Where an ASN.1 message (encoded byte stream) is input to the testing tool 400, the message-to-value translator 415 translates the ASN.1 message into an ASN.1 value notation, and the testing tool 400 outputs the ASN.1 value notation.

Referring now to FIGURE 5, an information flow diagram illustrates the testing of the application stack 302a of FIGURE 3 using the testing tool 400 of FIGURE 4. The test data 505 in a human readable form, such as the aforedescribed ASN.1 value notation, 505 as well as the ASN.1 specification 510 for the test data are respectively input into the testing tool 400. The testing tool 400 translates the test data using a predetermined encoding standard into an ASN.1 message and sends an ASN.1 message 515 to the application stack 302a. The application stack's 302a response to the ASN.1 message 515 indicates whether the application stack is operating properly. Where the application stack's 302a response includes sending a message to another application stack, such as 302b of FIGURE 3, the application stack 302a will generate an ASN.1 message 520. The ASN.1 message 520 generated by the application stack 302a is entered into the testing tool 400, which then translates the ASN.1 message 520 into the ASN.1 value notation of the data structure represented by the ASN.1 message 520.

Those skilled in the art will recognize that the information to be transferred can be implemented using input or output files. For example, the ASN.1 value notation 505 and the ASN.1 specification 510 can be stored as input files for the testing tool 400. The output of the testing tool 400 i.e., the ASN.1 message 515, can be stored as an output file by the testing tool. The output file of the testing tool can then be used as an input file for the application stack 302a. The ASN.1 message 520 generated by the application stack 302a can then be stored as an output file and then used as the input file of the testing tool 400, as is understood in the art.

The foregoing represents a way that a programmer can test a given application stack such as application stack 302a using logical test data without having to encode the data using an encoding standard. Additionally, any ASN.1 messages which are generated by the application stack 302b are translated into a human readable form. Therefore, the programmer is relieved of the cumbersome task of decoding an ASN.1 message such as the hexadecimal encoded message shown in Table 4. Another advantage is that the application stack 302a and the testing tool 400 can be run on the same platform, thus reducing the amount of hardware required for testing.

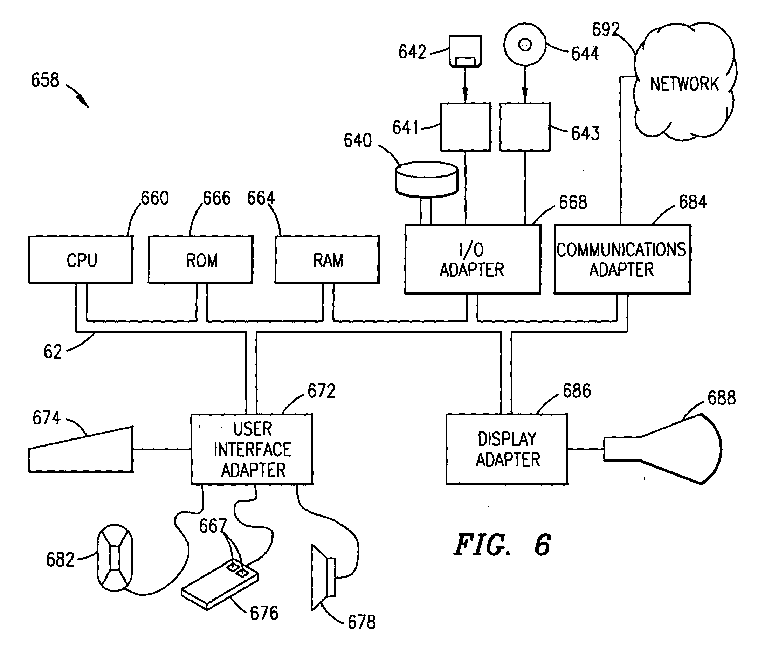

Referring now to FIGURE 6, a representative hardware environment for a platform 658 for practicing the present invention is depicted. A CPU 660 is interconnected via system bus 662 to random access memory (RAM) 664, read only memory (ROM) 666, an input/output (I/O) adapter 668, a user interface adapter 672, a communications adapter 684, and a display adapter 686. The input/output (I/O) adapter 668 connects peripheral devices such as hard disc drives 640, floppy disc drives 641 for reading removable floppy discs 642, and optical disc drives 643 for reading removable optical disc 644 (such as a compact disc or a digital versatile disc) to the bus 662. The user interface adapter 672 connects devices such as a keyboard 674, a mouse 676 having a plurality of buttons 667, a speaker 678, a microphone 682, and/or other user interfaces devices such as a touch screen device (not shown) to the bus 662. The display adapter 686 connects a monitor 688 to the bus 662. The communications adapter 684 connects the computer system to a data processing network 692. The data processing network 692 may include any number of other computer systems, such as another computer system 658 or a sewer, as well as mass storage elements such as another hard disc drive 640, or another optical disc drive 643 for reading optical discs 644.

The testing tool 400, as well as the application stack 302a can be implemented as sets of instructions resident in the random access memory 664 of one or more computer systems 658 configured generally as described in FIGURE 6. Until required by the computer system 658, the set of instructions may be stored in another computer readable memory, for example in a hard disc drive 640, or in removable memory such as an optical disc 644 for eventual use in an optical disc drive 643, or a floppy disc 642 for eventual use in a floppy disc drive 641. The aforementioned input and output files can be implemented as data resident in random access memory 664, hard disc 640, optical disc 644, or a floppy disc 642. Those skilled in the art will note that because computer system 658 is connected to data processing network 692, the random access memory 664, the hard disc drive 640, the floppy disc drive 641, the floppy disc 642,the optical disc drive 643, and the optical disc 644, may reside within the data processing network 692, and therefore, need not be directly connected to the CPU 660 via the bus 662.

Although the invention has been described with a certain degree of particularity, it should be recognized that elements thereof may be altered by persons skilled in the art without departing from the spirit and scope of the invention. Therefore, the invention is limited only by the following claims and their equivalents.

## Claims

1. A communications system for facilitating communications between disparate system components, said communications system comprising:
a first application program;
a coding module in communication with said first application program; and
a testing module in communication with said first application program and said coding module, said testing module converting data structures interchanged between said first application program and said coding module using an Abstract Syntax Notation One (ASN.1) specification, wherein said testing module converts the data structures sent from said first application program pursuant to a first protocol and the data structures sent to said first application program pursuant to a second protocol.

2. The communication system of claim 1, wherein said first protocol is a human readable format.

3. The communication system of claim 1, wherein said first protocol is an ASN.1 Value Notation format.

4. The communication system of claim 1, wherein said second protocol is Binary Encoded Rules (BER).

5. The communication system of claim 1, wherein said second protocol is Packed Encoding Rules (PER).

6. In a software system comprising an application program and a coding module, said application program and said coding module interchanging data structures, a method of testing said application program and said coding module, said method comprising the steps of:
receiving an Abstract Syntax Notation One (ASN.1) specification;
translating the data structures sent from the application program pursuant to a first protocol; and
translating the data structures sent to the application program pursuant to a second protocol.

7. The method of claim 6, wherein said first protocol is a human readable format.

8. The method of claim 6, wherein said first protocol is an ASN.1 Value Notation format.

9. The method of claim 6, wherein said second protocol is Binary Encoded Rules (BER).

10. The method of claim 6, wherein said second protocol is Packed Encoding Rules (PER).

11. An article of manufacture comprising a computer usable medium having computer readable program code means embodied thereon for testing an application program and a coding module, wherein said application program and said coding module interchange data structures, the computer readable code means in said article of manufacture comprising means for:
receiving an Abstract Syntax Notation One (ASN.1) specification;
translating the data structures sent from the application program pursuant to a first protocol; and
translating the data structures sent to the application program pursuant to a second protocol.

12. The article of manufacture of claim 11, wherein said first protocol is a human readable format.

13. The article of manufacture of claim 11, wherein said first protocol is an ASN.1 Value Notation format.

14. The article of manufacture of claim 11, wherein said second protocol is Binary Encoded Rules (BER).

15. The article of manufacture of claim 11, wherein said second protocol is Packed Encoding Rules (PER).
